Europäisches Patentamt

European Patent Office

Office européen des brevets

(19)

(11) Veröffentlichungsnummer : **0 476 759 B1**

(12) **EUROPÄISCHE PATENTSCHRIFT**

(45) Veröffentlichungstag der Patentschrift :
07.12.94 Patentblatt 94/49

(51) Int. Cl.$^5$ : **G06F 13/42**, G06F 1/08

(21) Anmeldenummer : **91202336.3**

(22) Anmeldetag : **12.09.91**

(54) **Schaltungsanordnung zur zeitweisen Verzögerung des Programmablaufs in einem Mikroprozessor.**

(30) Priorität : **19.09.90 DE 4029598**

(43) Veröffentlichungstag der Anmeldung :
**25.03.92 Patentblatt 92/13**

(45) Bekanntmachung des Hinweises auf die
Patenterteilung :
**07.12.94 Patentblatt 94/49**

(84) Benannte Vertragsstaaten :
**DE FR GB IT**

(56) Entgegenhaltungen :
**US-A- 4 050 096**
**US-A- 4 458 308**
**US-A- 4 819 164**

(73) Patentinhaber : **Philips Patentverwaltung GmbH**
**Wendenstrasse 35c**
**D-20097 Hamburg (DE)**
(84) **DE**
Patentinhaber : **N.V. Philips'**
**Gloeilampenfabrieken**
**Groenewoudseweg 1**
**NL-5621 BA Eindhoven (NL)**
(84) **FR GB IT**

(72) Erfinder : **Plog, Jürgen**
**Lutterothstrasse 51**
**W-2000 Hamburg 20 (DE)**

(74) Vertreter : **Poddig, Dieter, Dipl.-Ing. et al**
**Philips Patentverwaltung GmbH**
**Wendenstrasse 35c**
**D-20097 Hamburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung zur zeitweisen Verzögerung des Programmablaufs in einem Mikroprozessor mit einer Teileranordnung zum steuerbaren Teilen der Frequenz eines Taktsignals durch einen ersten oder einen zweiten Divisor zur Erzeugung eines ersten Taktsignals mit einer ersten Frequenz oder eines zweiten Taktsignals mit einer zweiten Frequenz, wobei der Takteingang des Mikroprozessors mit dem Ausgang der Teileranordnung verbunden ist und der Mikroprozessor für die Ausführung jeweils eines Befehls einen oder mehrere Zyklen mit je einer bestimmten Anzahl von Taktimpulsen benötigt und befehlsabhängig in einem bestimmten Abschnitt des Zyklus einen Zugriff auf eine externe Anordnung, insbesondere einen Speicher durchführt.

Eine derartige Schaltungsanordnung ist bekannt aus der DE-OS 38 16 642. Darin wird die Taktfrequenz des Mikroprozessors herabgesetzt, wenn dieser einen Zugriff auf eine externe Einrichtung wie einen Datenspeicher auslöst, da der Mikroprozessor nach dem Auslösen eines Zugriffs auf eine externe Anordnung für einen Datenaustausch insbesondere beim Lesen die gewünschten Daten eine bestimmte Anzahl von Taktphasen nach diesem Austausch benötigt. Durch das Herabsetzen der Taktfrequenz kann zwischen dem Auslösen eines Zugriffs und dem Empfang von Daten eine längere Zeitspanne liegen, als wenn der Mikroprozessor ständig mit maximaler Taktfrequenz arbeitet.

Häufig enthält ein Mikroprozessor jedoch auch interne Zeitglieder, die eine vorgegebene Anzahl von Taktimpulsen abzählen. Derartige Zeitglieder dienen beispielsweise zur Steuerung von seriellen Datenschnittstellen. Wenn die Taktfrequenz des Mikroprozessors nun nicht konstant ist, sondern abhängig von den unterschiedlichen Befehlen beim Programmablauf zwischen zwei Frequenzen umgeschaltet wird, können diese internen Zeitgeber keine konstanten vorgegebenen Zeitperioden mehr abmessen.

Aufgabe der Erfindung ist es daher, eine Schaltungsanordnung der eingangs genannten Art anzugeben, bei der es ebenfalls möglich ist, einen verzögerten Datenaustausch mit z.B. langsamen externen Einrichtungen durchzuführen, wobei die internen Zeitgeber des Mikroprozessors jedoch weiterhin definierte Zeitabschitte abmessen bzw. bestimmen können.

Diese Aufgabe wird erfindungsgemäß dadurch gelöst, daß die Teileranordnung in jedem Zyklus unabhängig davon, ob tatsächlich ein Zugriff vom Mikroprozessor durchgeführt wird, eine feste erste Anzahl Taktimpulse mit der ersten Frequenz und eine feste zweite Anzahl Taktimpulse mit der zweiten Frequenz erzeugt, wobei die Summe beider Anzahlen gleich der Anzahl Taktimpulse eines Zyklus ist.

Die Erfindung nutzt die Tatsache aus, daß ein Datenaustausch mit einer externen Einrichtung nur in einem bestimmten Abschnitt des Taktzyklus des Mikroprozessors auftreten kann, und in diesem Abschnitt wird dann stets die Taktfrequenz herabgesetzt. Dieses Herabsetzen erfolgt dann zwar auch, wenn bei entsprechenden Befehlen kein Zugriff auf eine externe Einrichtung erforderlich ist, so daß die mittlere Taktfrequenz und damit die Verarbeitungsgeschwindigkeit des Mikroprozessors insgesamt etwas herabgesetzt ist, jedoch ist die mittlere Taktfrequenz auf diese Weise wieder konstant.

Für die Erzeugung eines derartigen festen Wechsels von hoher und niedriger Taktfrequenz für den Mikroprozessor ist eine Ausgestaltung der Erfindung dadurch gekennzeichnet, daß die Teileranordnung einen ersten zyklischen Zähler, der das Taktsignal empfängt und ein zweites Taktsignal mit einer zweiten, niedrigeren Frequenz erzeugt, einen steuerbaren Umschalter, der wahlweise das Taktsignal oder das zweite Taktsignal einem Ausgang der Teileranordnung zuführt, und einen zweiten Zähler und einen dritten Zähler enthält, die beide das Taktsignal am Ausgang der Teileranordnung als Zähltakt empfangen und die je wenigstens einen Stop-Eingang und einen Übertragsausgang aufweisen, wobei der Übertragsausgang des zweiten bzw. dritten Zählers mit dem Stop-Eingang des dritten bzw. zweiten Zählers verbunden ist, so daß beide Zähler nur abwechselnd zählen, und der Übertragsausgang des einen der beiden Zähler den Umschalter steuert. Da beide Zähler stets abwechselnd und eine vorbestimmte Anzahl von Takten zählen, wird dadurch ein konstantes, synchron mit dem Maschinenzyklus auftretendes Muster von schnellen und langsamen Taktimpulsen mit einer konstanten mittleren Frequenz gebildet.

Die Abschnitte im Zyklus des Mikroprozessors, in denen das Taktsignal mit der niedrigeren Frequenz dem Mikroprozessor zugeführt wird, sollten möglichst gut in dem Abschnitt des Zyklus liegen, in denen ein Zugriff auf eine externe Einrichtung erfolgt. Dies kann nach einer weiteren Ausgestaltung der Erfindung weitgehend optimal dadurch erfolgen, daß der Beginn des Zählens des zweiten bzw. des dritten Zählers abhängig von dem erstmaligen Auftreten eines Zugriffssignals des Mikroprozessors gesteuert ist. Auf diese Weise ist keine Synchronisierung der Teileranordnung mit dem Zyklus des Mikroprozessors erforderlich. Eine noch genauere Anpassung der Abschnitte mit der hohen und der niedrigen Frequenz des Taktsignals an den Mikroprozessorzyklus kann nach einer weiteren Ausgestaltung der Erfindung dadurch erreicht werden, daß die Teileranordnung einen vierten Zähler enthält, der nach dem ersten Auftreten eines Zugriffssignals des Mikroprozessors eine vorgegebene Anzahl Impulse des Taktsignals bis zum Erreichen einer vorgegebenen Endstellung zählt und bis zu deren Erreichen ein Blockiersignal erzeugt, das das Zählen des zweiten und dritten Zählers blockiert. Dieser vierte Zähler zählt also nur einmalig nach dem Einschalten der Spannungsversorgung des Mikroprozessors bzw. nach einem allgemeinen Rücksetzsignal von dem erstmaligen Auftreten des Zugriffssignals, und danach zählen dann nur abwechselnd der zweite und der dritte Zähler, so daß der vierte Zähler lediglich eine Anfangsverschiebung des Zählwechsels des zweiten und dritten Zählers erzeugt. Dadurch kann der Abschnitt mit dem Taktsignal niedriger Frequenz beliebig genau auf den optimalen Bereich im Zyklus des Mikroprozessors gelegt werden.

Ausführungsbeispiele der Erfindung werden nachstehend anhand der Zeichnung näher erläutert. Es zeigen:

Fig. 1 ein Blockschaltbild eines Datenverarbeitungssystems mit einem Mikroprozessor und externen Einrichtungen,

Fig. 2 ein Blockschaltbild der Teileranordnung,

Fig. 3 und 4 Impulsdiagramme verschiedener Signale des Datenverarbeitungssystems bzw. der Teileranordnung.

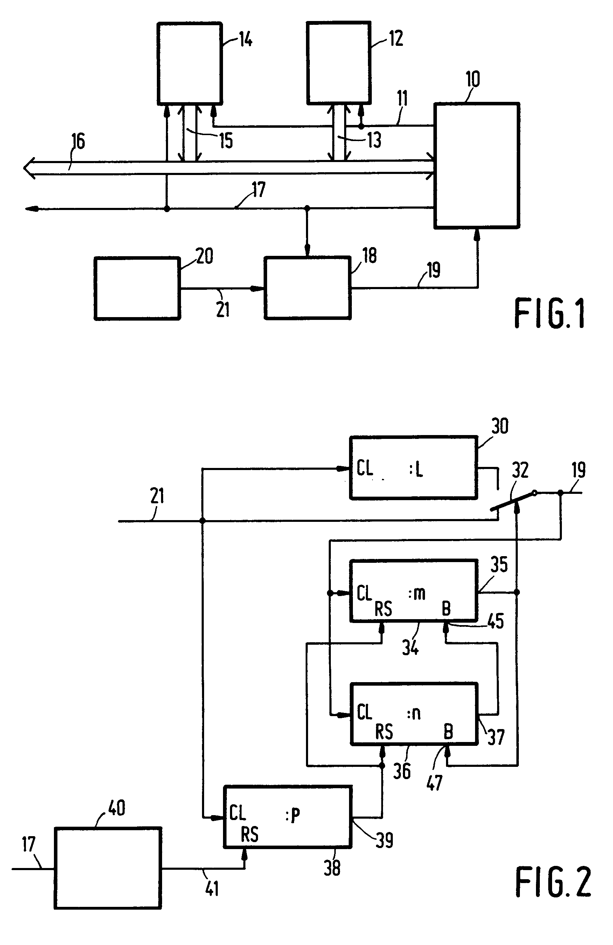

In Fig. 1 ist ein Teil eines Datenverarbeitungssystems mit einem Mikroprozessor 10 sowie zwei externen Einrichtungen 12 und 14, die hier als Speicher angenommen werden, dargestellt. Der Speicher 12 ist dabei der Programmspeicher, der die Befehlsfolgen enthält und vorzugsweise als schneller Festwertspeicher ausgebildet ist, während der Speicher 14 ein langsamerer Schreib-Lese-Speicher für Daten ist. Von dem Mikroprozessor 10 geht ein Informationsbus 16 aus, der tatsächlich aus einer Anzahl paralleler Leitungen besteht und über den Daten in beiden Richtungen transportiert werden können, d.h. aus dem Mikroprozessor 10 heraus oder zu diesem hin. Die Speicher 12 und 14 sind mit diesem Bus 16 über bidirektionale Verbindungen 13 bzw. 15 verbunden. Die Informationen auf dem Bus 16 können z.B. Daten oder Adressen bedeuten, was durch entsprechende Steuersignale auf der Verbindung 11 angegeben wird, die vom Mikro-prozessor 10 zu den Speichern 12 und 14 hinführt. Üblicherweise sendet der Mikroprozessor 10 auf dem Bus 16 zunächst eine Adresse aus, und über Steuersignale auch auf der Verbindung 11 wird angegeben, wann diese Adressen gültig sind und von dem betreffenden Speicher übernommen werden können. Danach lesen die Speicher 12 bzw. 14 den adressierten Speicherplatz aus und übertragen die ausgelesenen Daten über den Bus 16 zum Mikroprozessor, der diese Daten eine vorgegebene Zeitspanne nach den Steuersignalen auf der Verbindung 11 übernimmt. Über eine Leitung 17, die vom Mikroprozessor 10 ausgeht, wird ferner ein Zugriffsignal übertragen, wenn nicht der Programm-speicher 12 gelesen, sondern beispielsweise auf den Datenspeicher 14 zugegriffen werden soll. An den Bus 16 sowie die Steuerleitung 17 und gegebenenfalls weitere Steuerleitungen können noch weitere externe Einrichtungen angeschlossen sein, die der Übersichtlichkeit halber hier nicht dargestellt sind.

Der Ablauf im Mikroprozessor 10 wird durch Taktsignale gesteuert, die über die Leitung 19 zugeführt werden und die von einer Teileranordnung 18 abgegeben werden. Diese empfängt über die Leitung 21 von einem Taktgenerator 20 ein Taktsignal mit einer festen Frequenz und teilt dieses konstante Taktsignal durch zwei verschiedene Divisoren, so daß zwei weitere Taktsignale mit unterschiedlichen Frequenzen auftreten, und über einen Umschalter wird eines dieser beiden Taktsignale über die Leitung 19 abgegeben. Der eine Teilerfaktor in der Teileranordnung 18 ist zweckmäßigerweise gleich 1, d.h. es wird das Taktsignal auf der Leitung 21 oder ein daraus durch Frequenzteilung gewonnenes Taktsignal auf der Leitung 19 abgegeben. Diese Umschaltung wird durch das Lesesteuersignal auf der Leitung 17 gesteuert.

In Fig. 2 ist eine Ausführungsform der Teileranordnung 18 im Blockschaltbild näher dargestellt. Diese enthält eine Anzahl Zähler 30, 34, 36 und 38, die mit einem jeweils am linken Eingang CL empfangenen Taktsignal eine vorgegebene Anzahl Taktimpulse, die in den einzelnen Zählern mit einem Buchstaben symbolisch angegeben ist, einmalig oder zyklisch zählen, wonach sie dann eine Endstellung erreichen und am Übertragsausgang an der rechten Seite des betreffenden Blockes ein Ausgangssignal abgeben. Die Zähler 34 und 36 weisen ferner je einen Blockiereingang B (45 bzw. 47) auf, die das Zählen des betreffenden Zählers abhängig vom Signalwert an diesem Eingang ermöglichen.

Ferner weisen die Zähler 34, 36 und 38 einen Rückstelleingang RS auf, über den bei einem bestimmten Signal der Zähler auf einer bestimmten Stellung festgehalten wird.

Über die Leitung 21 wird das Taktsignal vom Taktgenerator 20 in Fig. 1 zugeführt, und ein Schalter 32, dessen Stellung vom Signal am Ausgang 35 des Zählers 34 gesteuert wird, verbindet die Leitung 19 entweder direkt mit der Leitung 21 oder mit dem Ausgang des Zählers 30, der ein Taktsignal mit einer um den Faktor L gegenüber der Taktfrequenz auf der Leitung 21 herabgesetzten Frequenz abgibt. Eine Einheit 40 empfängt das Zugriffsignal auf der Leitung 17 und erzeugt auf der Leitung 41 nach dem Anlegen der Betriebsspannung an die gesamte Anordnung ein Signal, das den Zähler 38 in einer vorgegebenen Stellung festhält, bis zum ersten Male auf der Leitung 17 ein Zugriffsteuersignal erscheint. In dieser Stellung erzeugt der Zähler 38 am Ausgang 39 ein Signal, das die beiden Zähler 34 und 36 jeweils in einer bestimmten Stellung festhält oder deren Zählen blockiert. Sobald ein Zugriffsignal auf der Leitung 17 erscheint, verschwindet das Signal auf der Leitung 41, und der Zähler 38 zählt eine Anzahl p Impulse des Taktsignals auf der Leitung 21, wonach er am Ausgang 39 ein Signal abgibt, das das weitere Zählen des Zählers 3c blockiert und dafür das Zählen der Zähler 34 und 36 freigibt. Dafür wird das Signal am Ausgang 39 über eine der Einfachheit halber nicht dargestellte Verbindung innerhalb des Zählers 38 zurückgekoppelt. Die Zähler 34 und 36 erhalten das Taktsignal auf der Leitung 19 als Zähltakt. Es wird angenommen, daß der Zähler 34 durch das Signal am Ausgang 39 des Zählers 38 in einer Stellung festgehalten wird, in der er am Übertragsausgang 35 ein Signal erzeugt, das den Zähler 36 über den Eingang 47 zum Zählen freigibt, während dieser am Ausgang 37 ein Signal erzeugt, das über den Eingang 45 ein Weiterzählen des Zählers 34 blockiert und somit das Signal am Ausgang 35 aufrechterhält.

Sobald der Zähler 36 nach einer Anzahl von n-Impulsen des Taktsignals auf der Leitung 19 seine Endstellung erreicht und am Ausgang 37 ein Signal erzeugt, das das Zählen des Zählers 34 freigibt, verschwindet das Signal am Ausgang 35 des Zählers 34, wodurch der Umschalter 32 in die dargestellte Lage umschaltet und das Weiterzählen des Zählers 36 über den Eingang 47 gesperrt wird, so daß das Signal am Ausgang 37 zunächst konstant bleibt.

Sobald der Zähler 34 nun m-Impulse des Taktsignals auf der Leitung 19 gezählt hat, wird am Ausgang 35 wieder ein Signal erzeugt, wodurch der Umschalter 32 umgeschaltet und der Zähler 36 zum Weiterzählen freigegeben wird, während über das Signal am Ausgang 37 das Weiterzählen des Zählers 34 blockiert wird. Auf diese Weise zählen die Zähler 34 und 36 abwechselnd m oder n Impulse, und in diesem abwechselnden Rhythmus wird auch der Umschalter 32 umgeschaltet. Die mittlere Frequenz $f_m$ des Taktsignals auf der Leitung 19 für den Mikroprozessor hängt von der Frequenz $f_c$ des Taktsignals auf der Leitung 21 wie folgt ab:

$$\frac{1}{f_m} = \frac{1}{m+n}\frac{n}{f_c} + \frac{m}{f_c/l}$$

Mit $k = \frac{m}{n}$ ergibt sich

$$f_m = f_c\frac{1 + k}{1 + k.L}$$

Da die Summe m+n gleich der Anzahl Taktimpulse des Mikroprozessors für einen Zyklus ist, ist die mittlere Frequenz der Taktimpulse in jedem Zyklus und damit insgesamt für den Mikroprozessor konstant, so daß Zeitgeber im Mikroprozessor insbesondere für längere Zeiten mit dem Mikroprozessortakt betrieben werden können.

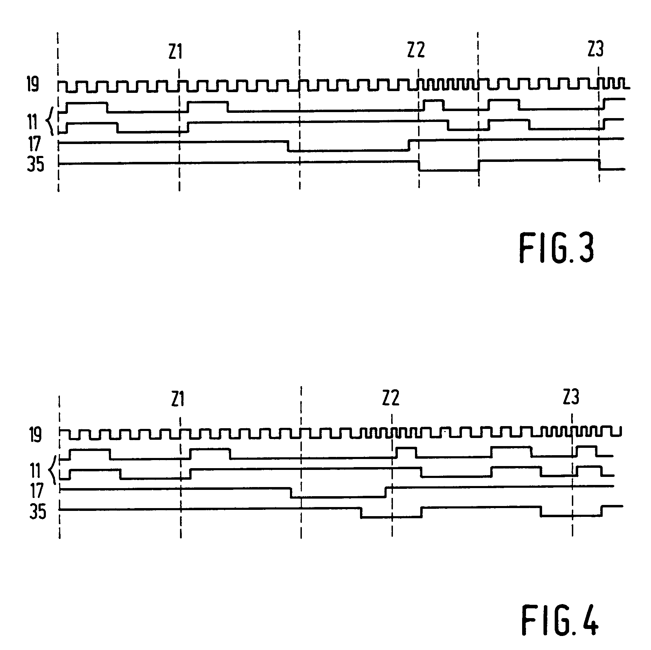

Der Zusammenhang der verschiedenen Frequenzen des Taktsignals auf der Leitung 19 mit Steuersignalen des Mikroprozessors 10 in Fig. 1 sowie mit dem Signal am Ausgang 35 des Zählers 34 in Fig. 2 zur Steuerung des Schalters 32 ist in Fig. 3 und Fig. 4 näher dargestellt. Dabei entsprechen die Nummern der einzelnen Kurvenformen den Bezugszeichen der Leitungen, auf denen die entsprechenden Signale auftreten. In Fig. 3 ist angenommen, daß der Zähler 38 in Fig. 2 nicht vorhanden ist, d.h. die Leitung 41 entspricht direkt dem Punkt 39.

Im Zyklus Z1 empfängt der Mikroprozessor zunächst ein Taktsignal mit einer niedrigen Frequenz, die die Hälfte der Frequenz auf der Leitung 21 in Fig. 1 bzw. Fig. 2 beträgt. Mit der ersten Rückflanke dieses Taktsignals werden auf der Steuerverbindung 11 vom Mikroprozessor zwei Signale hoch, womit ein vorher adressiertes Befehlswort aus dem Programmspeicher 12 in den Mikroprozessor übernommen wird. Mit der ersten Rückflanke dieses Signals im Zyklus Z1 wird eine vom Mikroprozessor 10 erzeugte Adresse in den Speicher 12 übernommen, und mit der Rückflanke des unteren Signals wird der Befehl zum Auslesen gegeben.

Mit der Rückflanke des ersten Taktimpulses nach der Hälfte des Zyklus Z1, die ebenfalls durch eine gestrichelte Linie in Fig. 3 angedeutet ist, erscheinen wieder die Vorderflanken der Signale auf der Verbindung 11, jedoch wird angenommen, daß es sich am Anfang des Zyklus Z1 um einen Befehl für einen Zugriff auf einen externen Speicher handelte, so daß nun in der Mitte des Zyklus kein neuer Befehl übernommen wird und das untere Signal auf der Verbindung 11 hoch bleibt. Statt dessen wird das invertierte Zugriffsignal auf der Leitung 17 am Ende des Zyklus Z1 niedrig, so daß nun die adressierte Speicherstelle aus dem Speicher 14 ausgelesen wird. Die ausgelesenen Daten werden nun eine bestimmte Anzahl von Taktimpulsen nach der Rückflanke des oberen Signals auf der Verbindung 11 in den Mikroprozessor übernommen, d.h. der Speicher 14 muß diese Daten bis zu diesem Zeitpunkt tatsächlich abgegeben haben. Wenn dieser Speicher 14 jedoch relativ langsam im Verhältnis zur Arbeitsgeschwindigkeit des Mikroprozessors ist, muß die Frequenz des Mikroprozessortaktes auf der Leitung 19 so gewählt werden, daß dann, wenn der Mikroprozessor die Daten übernehmen will, diese auch tatsächlich bereits vom Speicher abgegeben sind. Diese Frequenz kann bei langsamen Speichern jedoch durchaus wesentlich niedriger sein als die maximal zulässige Taktfrequenz des Mikroprozessors.

Um dessen Arbeitsgeschwindigkeit nun besser auszunutzen, wird bei dem Beispiel in Fig. 3 in der zweiten Hälfte des Zyklus Z2 die Frequenz des Mikroprozessortaktes durch den Signalwechsel am Ausgang 35 des Zählers 34 in Fig. 2 auf einen höheren Wert umgeschaltet, und zwar in diesem Falle auf die doppelte Frequenz, weil in diesem Abschnitt der Zyklen des Mikroprozessors kein Zugriff auf eine externe Einrichtung bzw. auf einen externen Datenspeicher auftreten kann und andererseits die Übernahme der Daten durch den Mikroprozessor bereits abgeschlossen ist. Auf diese Weise ist die Zyklusdauer nur auf das 1,5-fache gegenüber der minimalen Zyklusdauer erhöht, die sich bei ständig maximaler Taktfrequenz für den Mikroprozessor ergeben würde. Dieser Wechsel von niedriger und hoher Taktfrequenz setzt sich auch in dem Taktzyklus Z3 und den folgenden, nicht dargestellten Taktzyklen fort, auch wenn dort kein Zugriff auf eine externe Einrichtung stattfindet.

In Fig. 4 ist der Ablauf bei Verwendung der vollständigen in Fig. 2 dargestellten Schaltung, d.h. einschließlich des Zählers 38, dargestellt. Der Ablauf im ersten Zyklus Z1 stimmt mit dem in Fig. 3 überein und wird daher nicht nochmals erläutert. Mit dem Auftreten des Zugriffsignals auf der Leitung 17 wird nun der Zähler 38 in Fig. 2 freigegeben, der eine Anzahl von p Impulsen des Taktsignals zählt, im vorliegenden Falle drei Taktsignale. Sobald diese Taktsignale abgezählt sind und am Ausgang 39 in Fig. 2 ein Freigabesignal für die Zähler 34 und 36 erscheint, schaltet hier nun der Ausgang 35 des Zählers 34 gleich um, da er zunächst durch das Signal am Ausgang 37 des Zählers 36 festgehalten wird und nicht weiterzählt, wobei der Umschalter 32 in der dargestellten Lage steht und am Ausgang 19 Taktsignale mit hoher Frequenz abgegeben werden.

Diese Taktsignale werden nun vom Zähler 36 gezählt, und nach n Impulsen des Taktsignals, im vorliegenden Beispiel nach sechs Impulsen, erscheint am Ausgang 37 ein Signal, das den Zähler 34 freigibt, wodurch gleichzeitig das Signal am Ausgang 35 wechselt und nunmehr Taktimpulse mit niedrigerer Frequenz auf der Leitung 19 abgegeben werden, und zwar eine Anzahl m Impulse, in diesem Beispiel ebenfalls sechs Impulse, bis der Zähler 34 seine Endstellung erreicht und am Ausgang 35 das Signal wechselt, wodurch der Zähler 36 wieder eingeschaltet wird, usw. Dieser im Zyklus Z2 begonnene Wechsel setzt sich im Zyklus Z3 und den folgenden Zyklen ständig fort. Auf diese Weise kann erreicht werden, daß der Wechsel von hoher auf niedrige Taktfrequenz genau in dem Augenblick auftritt, wo ein Zugriff auf insbesondere einen externen Speicher auftritt, und die folgende Anzahl Taktimpulse mit niedriger Frequenz wird dann so gewählt, daß gerade am Ende dieser niedrigen Frequenz die Daten vom Speicher in den Mikroprozessor übernommen werden. Auf diese Weise kann ein optimales, exaktes Anpassen des Abschnittes mit den Taktsignalen niedriger Frequenz an die Zeitspanne zwischen Auslösen des Zugriffs und Übernahme von Daten angepaßt werden, so daß im übrigen der Mikroprozessor mit maximaler Taktfrequenz arbeiten kann.

## Patentansprüche

1. Schaltungsanordnung zur zeitweisen Verzögerung des Programmablaufs in einem Mikroprozessor mit einer Teileranordnung zum steuerbaren Teilen der Frequenz eines Taktsignals durch einen ersten oder einen zweiten Divisor zur Erzeugung eines ersten Taktsignals mit einer ersten Frequenz oder eines zweiten Taktsignals mit einer zweiten Frequenz, wobei der Takteingang des Mikroprozessors mit dem Ausgang der Teileranordnung verbunden ist und der Mikroprozessor für die Ausführung jeweils eines Befehls einen oder mehrere Zyklen mit je einer bestimmten Anzahl von Taktimpulsen benötigt und befehlsabhängig in einem bestimmten Abschnitt des Zyklus einen Zugriff auf eine externe Anordnung, insbesondere einen Speicher durchführt, dadurch gekennzeichnet, daß die Teileranordnung (18) in jedem Zyklus unabhängig davon, ob tatsächlich ein Zugriff vom Mikroprozessor durchgeführt wird, eine feste erste Anzahl Taktimpulse mit der ersten Frequenz und eine feste zweite Anzahl Taktimpulse mit der zweiten Frequenz erzeugt, wobei die Summe beider Anzahlen gleich der Anzahl Taktimpulse eines Zyklus ist.

2. Schaltungsanordnung nach Anspruch 1, dadurch gekennzeichnet, daß die Teileranordnung (18) einen ersten zyklischen Zähler (30), der das Taktsignal empfängt und ein zweites Taktsignal mit einer zweiten, niedrigeren Frequenz erzeugt, einen steuerbaren Umschalter (32), der wahlweise das Taktsignal oder das zweite Taktsignal einem Ausgang (17) der Teileranordnung (18) zuführt, und einen zweiten Zähler (34) und einen dritten Zähler (36) enthält, die beide das Taktsignal am Ausgang (17) der Teileranordnung (18) als Zähltakt empfangen und die je wenigstens einen Stop-Eingang (45, 47) und einen Übertragsausgang (35, 37) aufweisen, wobei der Übertragsausgang (35, 37) des zweiten bzw. dritten Zählers (34, 36) mit dem Stop-Eingang (47, 45) des dritten bzw. zweiten Zählers (36, 34) verbunden ist, so daß beide Zähler (34, 36) nur abwechselnd zählen, und der Übertragsausgang (35) des zweiten Zählers (34) den Umschalter (32) steuert.

3. Schaltungsanordnung nach Anspruch 2, dadurch gekennzeichnet, daß der Beginn des Zählens des zweiten bzw. des dritten Zählers (34, 36) abhängig von dem erstmaligen Auftreten eines Zugriffssignals des Mikroprozessors (10) gesteuert ist.

4. Schaltungsanordnung nach Anspruch 2, dadurch gekennzeichnet, daß die Teileranordnung (18) einen vierten Zähler (38) enthält, der nach dem ersten Auftreten eines Zugriffssignals des Mikroprozessors (10) eine vorgegebene Anzahl Impulse des Taktsignals bis zum Erreichen einer vorgegebenen Endstellung zählt und bis zu deren Erreichen ein Blockiersignal erzeugt, das das Zählen des zweiten und dritten Zählers (34, 36) blockiert.

## Claims

1. A circuit arrangement for temporarily slowing down the program execution in a microprocessor, comprising a divider arrangement for controllably dividing the frequency of a clock signal by a first or a second divisor in order to generate a first clock signal having a first frequency or a second clock signal having a second frequency, the clock input of the microprocessor being connected to the output of the divider arrangement, the microprocessor requiring one or more cycles, each cycle comprising a given number of clock pulses, in order to execute a respective instruction and accessing an external device, notably a memory, during a given part of the cycle in an instruction-dependent manner, characterized in that in each cycle the divider arrangement (18) generates a fixed first number of clock pulses having the first frequency and a fixed second number of clock pulses having the second frequency, regardless of whether or not the microprocessor actually performs an access operation, the sum of both numbers being equal to the number of clock pulses of a cycle.

2. A circuit arrangement as claimed in Claim 1, characterized in that the divider arrangement (18) comprises a first cyclic counter (30) which receives the clock signal and which generates a second clock signal having a second, lower frequency, a controllable switch (32) which optionally applies the clock signal or the second clock signal to an output (17) of the divider arrangement (18), and a second counter (34) and a third counter (36) which both receive the clock signal on the output (17) of the divider arrangement (18) as counting pulses and which each comprise at least a stop input (45, 47) and a carry output (35, 37), the carry output (35, 37) of the second and the third counter (34, 36) being connected to the stop input (47, 45) of the third counter and the second counter (36, 34) so that both counters (34, 36) count only alternately, the carry output (35) of the second counter (34) controlling the switch (32).

3. A circuit arrangement as claimed in Claim 2, characterized in that the beginning of counting by the second or the third counter (34, 36) is controlled in dependence on the first appearance of a microprocessor (10) access signal.

4. A circuit arrangement as claimed in Claim 2, characterized in that the divider arrangement (18) comprises a fourth counter (38) which, after the first appearance of a microprocessor (10) access signal, counts a predetermined number of pulses of the clock signal until it reaches a predetermined final position, and which generates a blocking signal until said final position is reached, which blocking signal blocks the counting by the second and the third counter (34, 36).

## Revendications

1. Montage de circuit pour le retardement temporaire de l'exécution d'un programme dans un microprocesseur, comportant un dispositif diviseur pour diviser de façon contrôlable la fréquence d'un signal d'horloge par un premier ou un deuxième diviseur en vue de produire un premier signal d'horloge avec une première fréquence ou un deuxième signal d'horloge avec une deuxième fréquence, étant entendu que l'entrée d'horloge du microprocesseur est connectée à la sortie du dispositif diviseur et que le microprocesseur nécessite, chaque fois pour l'exécution respective d'une instruction, un ou plusieurs cycles avec chacun un nombre déterminé d'impulsions d'horloge, et, qu'en fonction de l'instruction, il effectue dans une section déterminée du cycle un accès à un dispsositif externe, en particulier une mémoire, caractérisé en ce que le dispositif diviseur (18) est, dans chaque cycle, indépendamment du fait qu'un accès soit réellement effectué par le microprocesseur, produit un premier nombre fixe d'impulsions d'horloge avec la première fréquence et un deuxième nombre fixe d'impulsions d'horloge avec la deuxième fréquence, la somme des deux nombres étant égale au nombre d'impulsions d'horloge d'un cycle.

2. Montage de circuit selon la revendication 1, caractérisé en ce que le dispositif diviseur (18) contient un premier compteur cyclique (30), qui reçoit le signal d'horloge et produit un deuxième signal d'horloge avec une deuxième fréquence plus basse, un commutateur pouvant être commandé (32), qui achemine au choix le signal d'horloge ou le deuxième signal d'horloge à une sortie (17) du dispositif diviseur (18), et un deuxième compteur (34) ainsi qu'un troisième compteur (36), qui reçoivent tous deux le signal d'horloge à la sortie (17) du dispositif diviseur (18) en tant qu'impulsion de comptage et présentent respectivement au moins une entrée d'arrêt (45, 47) et une sortie de transmission (35, 37), la sortie de transmission (35, 37) du deuxième ou du troisième compteur (34, 36) étant connectée à l'entrée d'arrêt (47, 45) du troisième ou du deuxième compteur (36, 34), de telle sorte que les deux compteurs (34, 36) ne comptent qu'en alternance, et la sortie de transmission (35) du deuxième compteur (34) commande le commutateur (32).

3. Montage de circuit selon la revendication 2, caractérisé en ce que le début du comptage du deuxième ou du troisième compteur (34, 36) est commandé en fonction de la première apparition d'un signal d'accès du microprocesseur (10).

4. Montage de circuit selon la revendication 1, caractérisé en ce que le dispositif diviseur (18) contient un quatrième compteur (38) qui, après la première apparition d'un signal d'accès du microprocesseur (10), compte un nombre prédéterminé d'impulsions du signal d'horloge jusqu'à atteindre une position finale prédéterminée et produit jusque-là un signal de blocage qui bloque le comptage des deuxième et troisième compteurs (34, 36).

FIG.1

FIG.2

FIG.3

FIG.4